# EUROPEAN PATENT SPECIFICATION

(11) **EP 2 076 027 B1**
(45) Date of publication and mention of the grant of the patent: **29.05.2013**
(21) Application number: 08014709.3
(22) Date of filing: 19.08.2008
(51) Int. Cl.: H04N 5/44, H04N 5/445, H04N 21/462, H04N 21/44, H04N 21/258, H04N 21/4782, H04N 21/431, H04N 21/482, H04N 21/475, H04N 21/4722, H04N 21/485, H04N 21/442

(54) **Screen generating apparatus and screen layout sharing system**
Maskenerzeugungsvorrichtung und System zur gemeinsamen Nutzung des Maskenlayouts
Appareil de génération d'écran et système de partage de format d'écran

(30) Priority: 27.12.2007 JP 2007335891
(43) Date of publication of application: 01.07.2009
(73) Proprietor: MITSUBISHI ELECTRIC CORPORATION, Chiyoda-ku Tokyo 100-8310 (JP)
(72) Inventor: Sakaguchi, Hiroki, Tokyo 100-8310 (JP); Hanada, Takehiko, Tokyo 100-8310 (JP); Imai, Shigeru, Tokyo 100-8310 (JP); Miura, Shin, Tokyo 100-8310 (JP); Matsubara, Masami, Tokyo 100-8310 (JP); Akatsu, Shinji, Tokyo 100-8310 (JP)
(74) Representative: Pfenning, Meinig & Partner GbR

(56) References cited:
- EP-A- 1 178 678
- US-A1- 2002 078 447
- US-A1- 2002 196 370
- US-A1- 2004 117 850
- US-A1- 2007 052 855

## Description

### BACKGROUND OF THE INVENTION

### Field of the Invention

The present invention relates to a technology for changing a screen display layout according to a viewer's taste, attributes, specification, and so on in a screen generating apparatus which can simultaneously display various pieces of information, such as information about a digital data transmission service and information about an IP broadcast service, together with an on-screen video (or image).

### Description of Related Art

Information services which provide many persons with the same information, such as digital data transmission services and IP (Internet Protocol) broadcast services, can provide related information in the form of, for example, alphabetic information or image information, advertisement, and so on in synchronization with a video. For example, a terrestrial digital media broadcasting service provides, in synchronization with a video, contents-of-broadcast related information described in BML (Broadcast Markup Language), general information including news, a weather forecast, or the like, information about the provider of the video, advertisement, or the like. When a viewer views and listens to such information, he or she operates a broadcast receive terminal using a remote control or the like so as to make it display an information screen. An information service using communications provides, via the Internet, information including news, a weather forecast, a stock price, or the results of a search for restaurants, which is described in HTML (HyperText Markup Language). Conventionally, for an information service, such as a broadcast, which provides many persons with the same information, there is provided only one pattern of screen layout of information which is to be displayed on a broadcast receive terminal in synchronization with a video, and the pattern is fixed. Therefore, it is impossible to change the screen layout according to the viewer's attributes or utilizing environments. Because information to be displayed is determined according to the screen layout, the fact that the screen layout cannot be changed results in that the type of the information to be displayed cannot be changed.

To solve this problem, for example, patent reference 1 proposes a screen generating apparatus for changing the screen layout of information which is provided in synchronization with a video which is played back by a broadcast receive terminal. The screen generating apparatus selects a screen layout according to a viewer's sex, taste information, and so on from a number of patters of screen layouts which are provided by an information provider. Therefore, the conventional screen generating apparatus can display an information screen with a screen layout suitable for the viewer's attributes.
[Patent reference 1] JP,2007-13819,A

Because the conventional screen generating apparatus is constructed as mentioned above, the screen generating apparatus cannot select any screen layout except one of screen layouts provided by the information provider, and therefore the viewer cannot but select both a desired screen layout and information to be displayed in the selected screen layout collectively. A problem is therefore that the viewer cannot change the screen layout and the information to be displayed in the screen layout freely.

US 2002/78947 A1 describes an apparatus and a method for processing video and audio data by choosing freely or from a history database a screen layout.

EP 1 178 678 A2 discloses a system of a plurality of television receivers which can be controlled by a single remote control device.

US 2002/196370 A1 describes methods and devices for adaptively placing overlay elements in videos. For determination of areas, the motion activity of the video is analyzed and the area with less motion activity is extracted. US 2004/117850 A1 describes a media exchange network, according to which media stored on a personal computer can be used by another user from a different computer. US 2007/52855 A1 discloses an apparatus for providing multiple screens and methods of dynamically configuring multiple screens.

### SUMMARY OF THE INVENTION

The present invention is made in order to solve the above-mentioned problem, and it is therefore an object of the present invention to provide a screen generating apparatus which can switch to a screen display visible to a viewer by allowing the viewer to freely make a setting of arrangement of pieces of video information and applications which display the pieces of video information, respectively.

The object of the present invention is solved by the screen generating apparatus according to claim 1 and the screen layout sharing system according to claim 7. Advantageous improvements of the screen generating apparatus are given in the dependent claims.

In accordance with the present invention, there is provided a screen generating apparatus including: a receiving unit for receiving a content having an identification number; an application executing unit for executing an application which generates an application image; a screen layout forming unit for, for the identification number, generating screen layout information which associates the application image generated by the application with a preset screen area; an application drawing unit for drawing the application image generated by the application in the screen area associated with the application image on a basis of the screen layout information generated by the screen layout forming unit; and a video output unit for displaying the application image drawn by the application drawing unit on a screen while superimposing the application image on a video included in the content.

As previously mentioned, because the screen generating apparatus in accordance with the present invention includes: the receiving unit for receiving a content having an identification number; the application executing unit for executing an application which generates an application image; the screen layout forming unit for, for the identification number, generating screen layout information which associates the application image generated by the application with a preset screen area; the application drawing unit for drawing the application image generated by the application in the screen area associated with the application image on a basis of the screen layout information generated by the screen layout forming unit; and the video output unit for displaying the application image drawn by the application drawing unit on a screen while superimposing the application image on a video included in the content, the screen generating apparatus enables the viewer to freely perform a setting of arrangement of one or more applications each of which displays video information and can switch to a screen display visible to the viewer.

Further objects and advantages of the present invention will be apparent from the following description of the preferred embodiments of the invention as illustrated in the accompanying drawings.

### BRIEF DESCRIPTION OF THE DRAWINGS

Fig. 1 is an explanatory drawing showing the structure of a broadcast receiving system in accordance with Embodiment 1 of the present invention;
Fig. 2 is a block diagram showing the structure of a screen generating apparatus in accordance with Embodiment 1 of the present invention;
Fig. 3 is an explanatory drawing showing an example of video information metadata in accordance with Embodiment 1 of the present invention;
Fig. 4 is an explanatory drawing showing an example of areas in which applications which are displayed on the screen of a broadcast receive terminal in accordance with Embodiment 1 of the present invention can be arranged, respectively;
Fig. 5 is an explanatory drawing showing an,example of an application which is displayed on the screen of the broadcast receive terminal in accordance with Embodiment 1 of the present invention;
Fig. 6 is an explanatory drawing showing an example of the screen of the broadcast receive terminal in accordance with Embodiment 1 of the present invention;
Fig. 7-1 is a sequence diagram showing the operation of the screen generating apparatus in accordance with Embodiment 1 of the present invention;
Fig. 7-2 is a sequence diagram showing the operation of the screen generating apparatus in accordance with Embodiment 1 of the present invention;
Fig. 8 is the explanatory drawing showing an example of an application selection screen displayed on the screen of the broadcast receive terminal in accordance with Embodiment 1 of the present invention;
Fig. 9 is an explanatory drawing showing the structure of a screen layout sharing system in accordance with Embodiment 2 of the present invention;
Fig. 10 is a block diagram showing the structure of the screen layout sharing system in accordance with this Embodiment 2;
Fig. 11 is a block diagram showing the structure of a screen generating apparatus in accordance with Embodiment 4 of the present invention;
Fig. 12 is a block diagram showing the structure of the screen generating apparatus in accordance with Embodiment 4 of the present invention;
Fig. 13 is an explanatory drawing showing an example of the screen of a broadcast receive terminal in accordance with this Embodiment 4; and
Fig. 14 is a block diagram showing the structure of a screen generating apparatus in accordance with Embodiment 5 of the present invention.

### DETAILED DESCRIPTION OF THE PREFERRED EMBODIMENTS

### Embodiment 1.

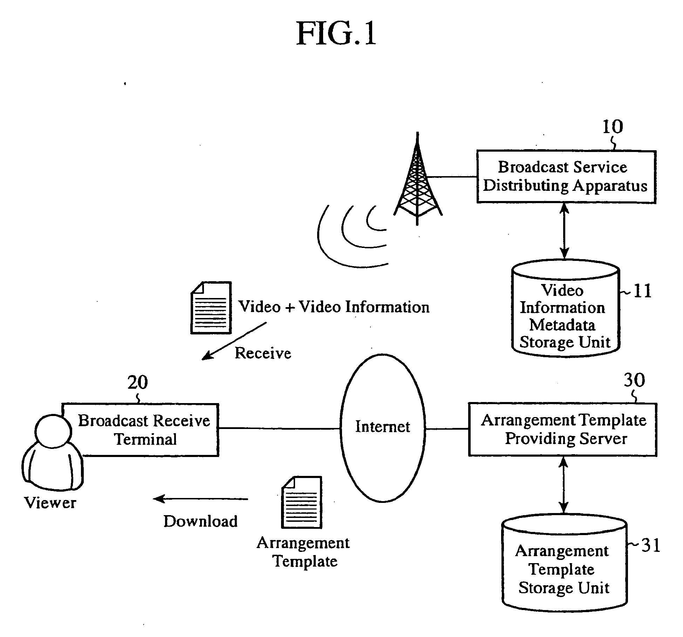

Fig. 1 is an explanatory drawing showing the structure of a broadcast receiving system in accordance with Embodiment 1 of the present invention. The broadcast receiving system shown in Fig. 1 is comprised of a broadcast service distributing apparatus 10 for distributing a video or an audio (a content), and video information metadata, a broadcast receive terminal 20 provided with a screen generating apparatus, for receiving the video or the audio, and the video information metadata, and for producing a screen display, and an arrangement template providing server 30 for providing an arrangement template via the Internet.

The broadcast service distributing apparatus 10 shown in Fig. 1 is provided with a video information metadata storage unit 11 for storing the video information metadata associated with the video or the audio therein, and multiplexes the video information metadata associated with the video together with the video or the audio and distributes them. The broadcast receive terminal 20 receives the video or the audio, and the video information metadata which are distributed thereto from the broadcast service distributing apparatus 10 by the screen generating apparatus, and also downloads an arrangement template via the Internet from the arrangement template providing server 30 and places one or more applications each of which draws video information metadata on the screen. The arrangement template providing server 30 is provided with an arrangement template storage unit 31, and distributes an arrangement template used for a control operation of placing video information metadata on the screen (not shown) of the broadcast receive terminal 20 via the Internet.

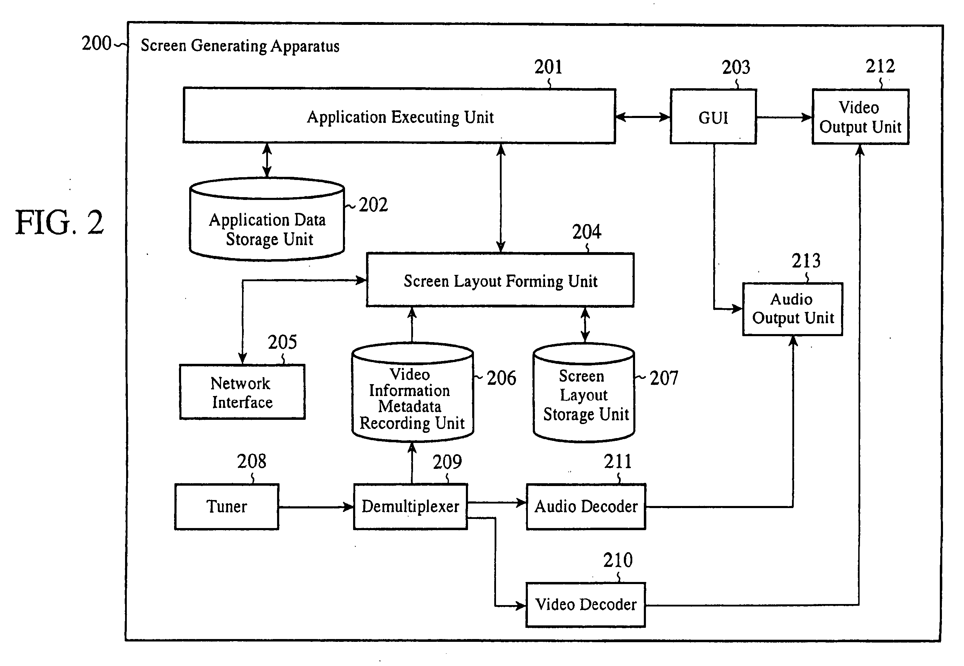

Fig. 2 is a block diagram showing the structure of the screen generating apparatus in accordance with Embodiment 1 of the present invention. In the screen generating apparatus 200 which the broadcast receive terminal 20 has, a tuner (a receiving unit) 208 receives a video or an audio, and video information which are distributed thereto from the broadcast service distributing apparatus 10. A demultiplexer 209 demultiplexes the video, the audio, and the video information which are received into video data, audio data, and video information metadata, and then outputs them to a video decoder 210, an audio decoder 211, and a video information metadata recording unit 206, respectively. The video decoder 210 and the audio decoder 211 decode the video data and the audio data, respectively, and output them to a video output unit 212 and an audio output unit 213, respectively. A network interface 205 is connected to a network, such as the Internet, and downloads an arrangement template (one or more preset screen areas) distributed thereto from the arrangement template providing server 30.

A screen layout forming unit 204 generates a screen layout used for setting up the position of display and arrangement of one or more applications each of which draws video information on the screen, and so on by using the video information metadata and the arrangement template. A screen layout storage unit 207 stores the generated screen layout therein. An application executing unit 201 executes an application by using both the screen layout recorded into the screen layout storage unit 207 and the application data about the application which are recorded into the application data storage unit 202. By executing a specific application, the application executing unit generates a specific video and a specific audio. A GUI (Graphical User Interface, an application drawing unit) 203 carries out a drawing process of drawing an application or the like which is to be displayed on the screen, an audio output process, and a process of inputting an operational instruction which is provided by a viewer using an input device not shown, such as a remote control.

The video output unit 212 mixes one or more applications (i.e., one or more application images) drawn by the GUI 203 and the decoded video data outputted from the video decoder 210 into an image, and displays this image on the screen. The audio output unit 213 mixes the audio data (i.e., application sounds) about the one or more applications which are generated by the application executing unit 201 and the decoded audio data outputted from the audio decoder 211 into a sound, and outputs this sound from a speaker not shown.

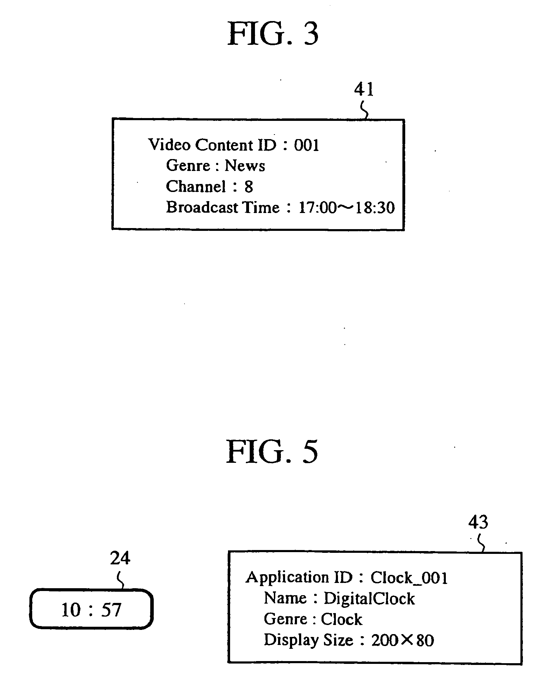

Fig. 3 is an explanatory drawing showing an example of the video information metadata in accordance with Embodiment 1 of the present invention. The video information metadata 41 shown in Fig. 3 are video information which is multiplexed into a video received by the tuner 208 and is distributed, and are demultiplexed by the demultiplexer 209 and are recorded into the video information metadata recording unit 206. The video information metadata 41 is comprised of a video content ID (an identification number) which specifies a video content about the belonging video, the genre of the video contents, broadcast channels in an area in which the viewer lives, broadcast times, and so on. Like EGP (Electric Program Guide), the video information metadata 41 are multiplexed together with the video, and are usually transmitted, via a broadcast wave, from the broadcast service distributing apparatus 10.

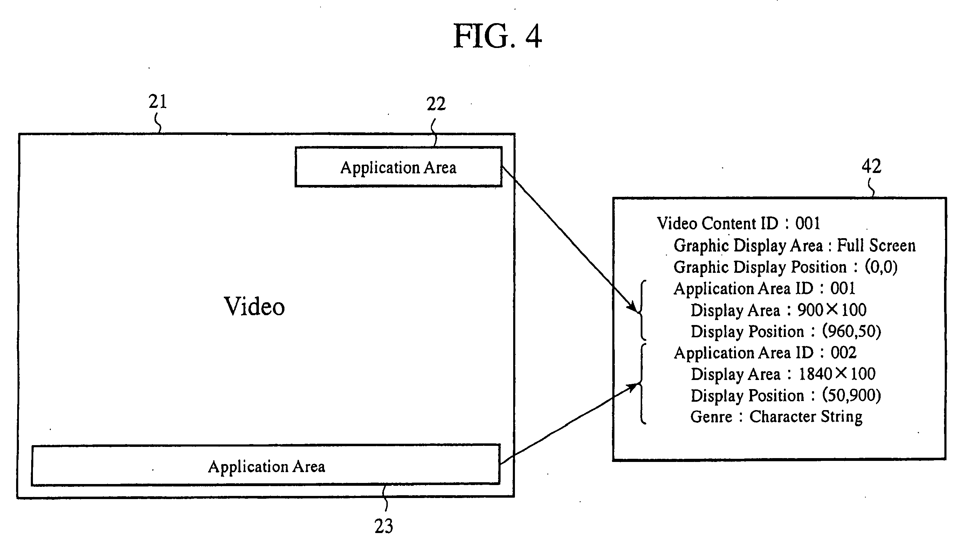

Fig. 4 is an explanatory drawing showing an example of areas in which applications which are displayed on the screen of the broadcast receive terminal in accordance with Embodiment 1 of the present invention can be arranged, respectively. In the broadcast receive terminal 20, the application areas 22 and 23 each of which is an area in which an application can be drawn are disposed on the screen 21 on which the video is displayed. These application areas 22 and 23 are defined by an arrangement template 42. This arrangement template 42 is provided, via the Internet, by the arrangement template providing server 30. The screen generating apparatus 200 shown in Fig. 2 downloads the arrangement template associated with the video currently being received via the network interface 205. This Embodiment 1 will be explained by using the arrangement template 42 in which the two application areas are disposed. A video content ID described in the arrangement template 42 is associated with the video content ID of the video information metadata 41 shown in Fig. 3.

In this arrangement template 42, an application area ID "001" which determines the application area 22, a display area "900x100" which shows the size of the area in which the application is displayed, a display position "(900, 50) " which shows the coordinates of the display area on the screen 21, and so on are described. Similarly, an application area ID which determines the application area 23, a display area, a display position, and so on are described in the arrangement template. In this example, a genre: "character string" which restricts the genre of an application which can be displayed in the application area 23 is added to the description of the arrangement template 42 which determines the application area 23.

Fig. 5 is an explanatory drawing showing an example of applications which are displayed on the screen of the broadcast receive terminal in accordance with Embodiment 1 of the present invention. An application 24 which is displayed on the screen is defined by application data 43. This application data 43 are stored beforehand in the application data storage unit 202. In the application data 43, an application ID which specifies the application, a name showing the application's name, the genre of the application, a display size showing the size of the display area on the screen 21 required to draw the application, and so on are described. In the figure, the application 24 having "genre: clock" (referred to as a clock application) is only an example of its outward appearance at the time when the GUI 203 draws the application on the screen on the basis of the application data 43 in response to a drawing request from the application executing unit 201.

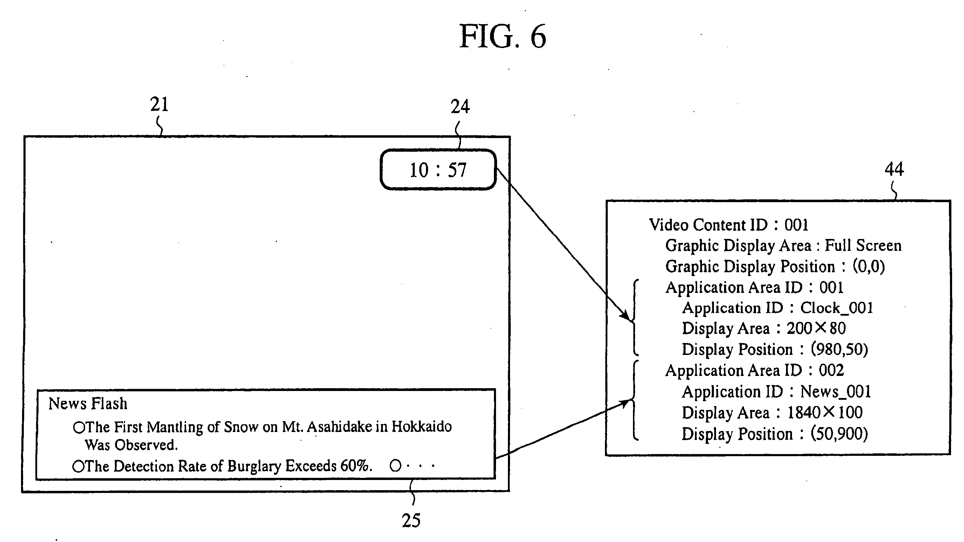

Fig. 6 is an explanatory drawing showing an example of the screen of the broadcast receive terminal in accordance with Embodiment 1 of the present invention. In the screen 21 shown in Fig. 6, a video currently being received from the broadcast service distributing apparatus 10 is displayed, and an application 24 which is a clock application and an application 25 which is a news application are drawn, respectively while they are superimposed on the video. In Fig. 6, the clock application 24 is drawn in the application area 22 shown in Fig. 4, and the news application 25 is drawn in the application area 23 shown in Fig. 4.

These applications 24 and 25 shown in Fig. 6 are drawn according to the description of the screen layout 44. The screen layout 44 corresponds to the video information metadata 41 shown in Fig. 3, and is generated on the basis of both the arrangement template 42 shown in Fig. 4 and the application data 43 shown in Fig. 5. The application 24 is defined by a description which starts from "application area ID: 001" in the screen layout 44. In the description starting from the application area ID "001" which determines the application area 22, an application ID "Clock_001" which specifies the application 24, a display area "200x80" which shows the size of the display area, a display position " (980, 50) " which shows the coordinates of the display area are described. Similarly, the application 25 is defined by a description which starts from "application area ID: 002" in the screen layout 44. The application ID of the application 24 is the same as the application ID described in the application data 43 shown in Fig. 5, and the display area and the display position show a display area and a display position where, as a result of the arrangement on the screen 21, the application is placed, respectively. Furthermore, a video content ID "001" of this screen layout 44 is associated with the video content ID "001" of the video information metadata 41 shown in Fig. 3.

The broadcast service distributing apparatus 10 multiplexes pieces of information, such as the current time and a news flash, which are displayed in the applications, like the clock application and the news application, to the video information, and distributes them. As an alternative, the broadcast receive terminal can acquire those pieces of information from the broadcast service distributing apparatus 10 via HTTP communications using the network interface 205, or the like, or the pieces of information can be enclosed with the application data 43.

Thus, because the video information metadata and the arrangement template are associated with each other by way of the video content ID, the application areas are automatically determined by the video content ID. The user can select and set up freely the type of the application which is to be displayed in each of the application areas. This type of the application which is to be displayed in each of the application areas can be a type of application which is associated with the video distributed from the broadcast service distributing apparatus 10 and which displays the description of program information, or a type of application which displays a description which is not associated with the video, like the current time.

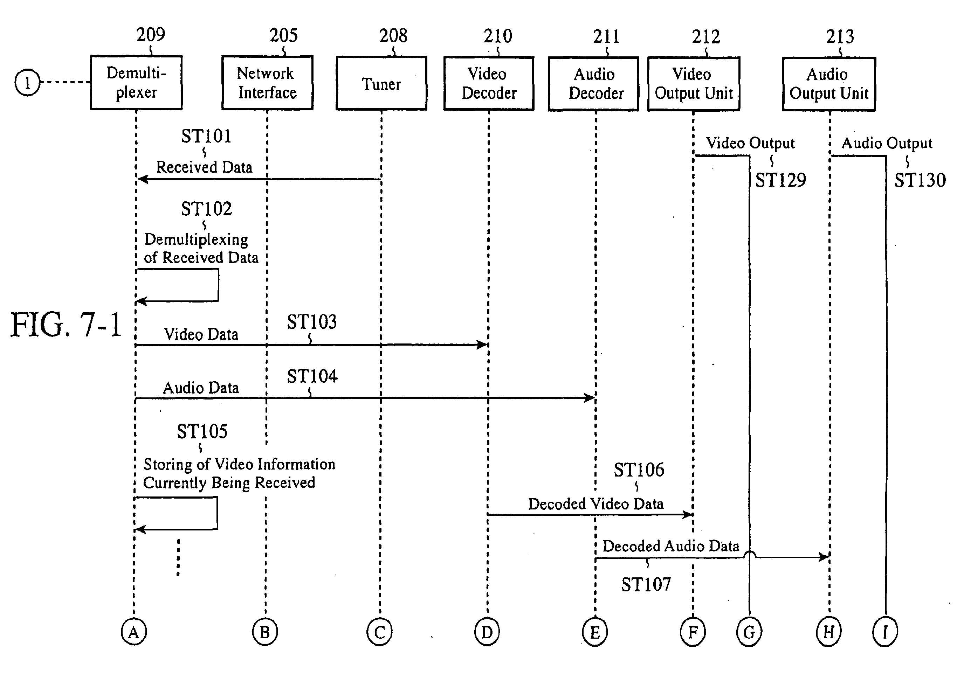

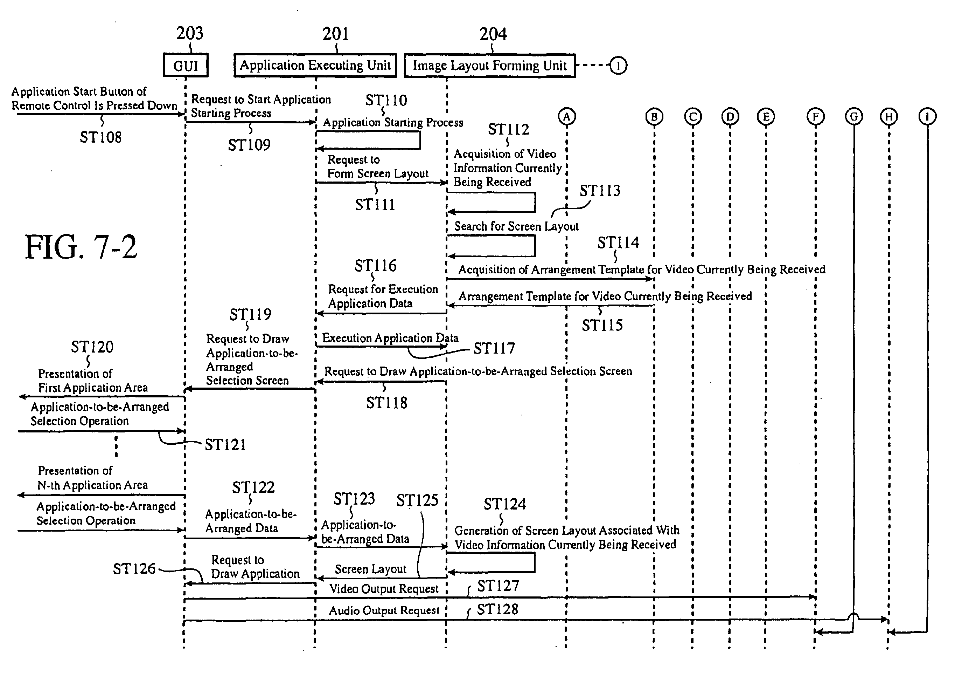

Hereafter, the operation of the screen generating apparatus 200 will be explained. Fig. 7 is a sequence diagram showing the operation of the screen generating apparatus in accordance with Embodiment 1 of the present invention. In Fig. 7, the same components as those shown in Fig. 2 or like components are designated by the same reference numerals as those shown in Fig. 2 and the explanation of the components will be omitted hereafter. In the screen generating apparatus 200, the tuner 208 receives a video, an audio, and video information which the broadcast service distributing apparatus distributes at all times, and outputs them to the demultiplexer 209 (step ST101). The demultiplexer 209 demultiplexes the set of the video, the audio, and the video information received from the tuner 208 into video data, audio data, and video information (step ST102) . The demultiplexed video data are outputted to the video decoder 210 (step ST103), and the demultiplexed audio data are outputted to the audio decoder 211 (step ST104). The video information is stored, as video information metadata 41, in the video information metadata recording unit 206 (step ST105).

Next, the video decoder 210 and the audio decoder 211 decode the video data and the audio data, respectively, and the decoded video data and the decoded audio data which are decoded by the video decoder and the audio decoder are outputted to the video output unit 212 and the audio output unit 213, respectively (step ST106 and ST107). The above-mentioned processes of steps ST101 to ST207 are carried out repeatedly while the video, the audio, and the video information are received.

When a viewer performs an operation of pressing down an application start button of an input device, such as a remote control, or the like to input a request to start an application to the GUI 203 during a time period during which the above-mentioned processes are performed (step ST108), the GUI 203 makes a request of the application executing unit 201 to start a process of starting the application (step ST109). The application executing unit 201 then performs a process of starting the application which the application executing unit has been requested to start by the GUI 203 (step ST110), and makes a request of the screen layout forming unit 204 to form a screen layout (step ST111). In response to this request, the screen layout forming unit 204 acquires the video information metadata currently being received from the broadcast service distributing apparatus 10, which are stored in the video information metadata recording unit 206 (step ST112).

In step ST113, the screen layout forming unit 204 determines whether the screen layout 44 (shown in Fig. 6) associated with the acquired video information metadata 41 (shown in Fig. 3) is already stored in the screen layout storage unit 207 by using the video content ID. As a result of, in step ST113, determining whether the screen layout associated with the acquired video information metadata is already stored in the screen layout storage unit, if there exists no screen layout in which the same video content ID as the video content ID "001" described in the video information metadata is described, the network interface 205 downloads the arrangement template 42 (shown in Fig. 4) associated with the video information currently being received which is provided from the arrangement template providing server 30 first in response to the request from the screen layout forming unit 204 (step ST114). The screen layout forming unit 204 acquires this arrangement template (step ST115). The screen layout forming unit 204 acquires the application data 43 (shown in Fig. 5) about one or more applications which are to be executed from the application data storage unit 202 via the application executing unit 201 (steps ST116 and ST117). In the screen generating apparatus 200, the same number of application data as the number of applications which can be started are outputted from the application data storage unit 202 to the screen layout forming unit 204.

Next, in order to make the viewer select the type of one or more applications which are to be arranged respectively in one or more application areas described in the arrangement template, the screen layout forming unit 204, in steps ST118 and ST119, makes a request of the GUI 203 to draw an application selection screen via the application executing unit 201. In response to this request, the GUI 203 displays the application selection screen on the screen (step ST120).

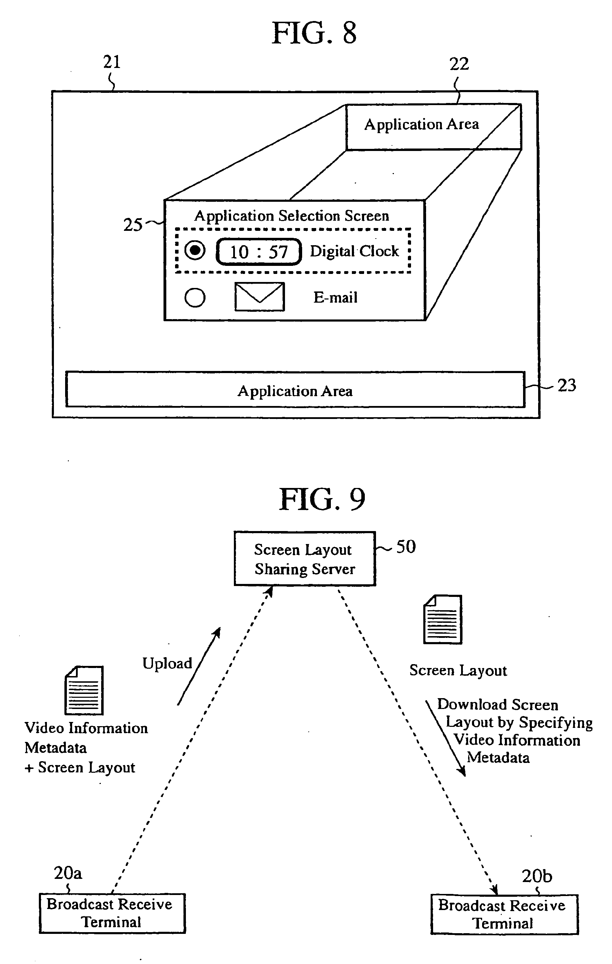

An example of the application selection screen displayed on the screen is shown in Fig. 8. Fig. 8 is an explanatory drawing showing an example of the application selection screen displayed on the screen of the broadcast receive terminal in accordance with Embodiment 1 of the present invention. In Fig. 8, the same components as those shown in Figs. 4 and 5 or like components are designated by the same reference numerals as those shown in Figs. 4 and 5 and the explanation of the components will be omitted hereafter. Only the types of applications which meet conditions, such as display areas and genres, which are described in the arrangement template among a plurality of application data which are acquired from the application data storage unit 202 are displayed on this application selection screen 25. In the example shown in Fig. 8, a clock application and an e-mail application are displayed and either of these two applications can be placed in the application area 22. The viewer operates the input device, such as a remote control, so as to select an application to be placed in the application area 22.

The GUI 203 accepts a request to select the application from the input device (step ST121), so that the application to be placed in the application area 22 is determined. When there is two or more application areas, the broadcast receive terminal has only to repeatedly perform the steps ST118 to ST121 only the number of application areas in such a way as to, for example, determine an application to be placed in the application area 23 after determining an application to be placed in the application 22.

The GUI 203 notifies the application data corresponding to the application selected for each application area to the screen layout forming unit 204 via the application executing unit 201 (steps ST122 and ST123). The screen layout forming unit 204 which has received this notification generates a screen layout which is a combination of the arrangement template associated with the video information currently being received and the application data about the one or more applications to be respectively placed in the one or more application areas which are defined by the arrangement template (step ST124). This screen layout is associated with the video information metadata and is stored in the screen layout storage unit 207.

If it is determined, as a result of the determination in step ST113, that there exists a screen layout in which the same video content ID as the video content ID "001" described in the video information metadata is described, the screen layout forming unit 204 outputs the screen layout acquired from the screen layout storage unit 207 to the application executing unit 201, whereas, if there exists no existing screen layout in which the same video content ID as the video content ID "001" described in the video information metadata is described, the screen layout forming unit 204 outputs the new screen layout generated in steps ST124 to ST116 to the application executing unit 201 (step ST125). In a case in which there exists an existing screen layout in which the same video content ID as the video content ID "001" described in the video information metadata is described, the broadcast receive terminal has only to inquire of the viewer whether to use the existing screen layout, and advance to the same process to generate a new screen layout when the viewer does not use the existing screen layout, as in the above-mentioned case in which there exists no screen layout in which the same video content ID as the video content ID "001" described in the video information metadata is described.

The application executing unit 201 makes a request of the GUI 203 to perform a process of drawing the one or more applications on the basis of the screen layout (step ST126). The application executing unit 201 generates audio data for the one or more applications on the basis of the application data about the one or more applications, and outputs the audio data to the GUI 203. The GUI 203 then makes a request of the video output unit 212 and the audio output unit 213 to output the video data and the audio data about the one or more applications which are specified by the screen layout, respectively (steps ST127 and ST128). The video output unit 212 mixes the decoded video data outputted in step ST106 with the video data outputted in step ST116 in response to the received output request, and outputs them (step ST129) . The audio output unit 213 mixes the decoded audio data outputted in step ST107 with the audio data outputted in step ST117 in response to the received output request, and outputs them (step ST130).

The screen layout in which the plurality of applications are associated with the single type of video information metadata can be thus generated, and, as shown in Fig. 6, the plurality of applications 24a and 24b can be arranged on the screen 21. For example, video information metadata associated with a program which is broadcast on the same day and at the same time every week are the same regardless of the broadcast date. Therefore, the viewer has only to generate a screen layout corresponding to the video information metadata about the program once and store the screen layout in the screen layout storage unit 207, and, after that, when viewing and listening to the program, does not need to make a setting of arrangement of one or more applications.

Furthermore, by allowing the viewer to make a setting of arrangement of one or more applications using an arrangement template, the broadcast receive terminal can restrict the number of items which the viewer has to operate in order to make a setting of arrangement of one or more applications and can therefore decrease the number of times that the viewer performs an operation for the setting. In addition, the broadcast provider can provide the arrangement template so as to prevent the one or more applications from being arranged in one or more non-intended locations, respectively, on the video displayed on the screen.

As mentioned above, the screen generating apparatus in accordance with embodiment 1 is provided with the tuner 208 for receiving a video, an audio, and video information which are identified by a video content ID, the application executing unit 201 for executing an application, the screen layout forming unit 204 for generating a screen layout for associating an application, which is determined by, for example, a user, with each application area described by an arrangement template for each video content ID, the GUI 203 for drawing an image generated by the application in each application area on the basis of the screen layout generated by the screen layout forming unit 204, the video output unit 212 for superimposing the image generated by each application, which is drawn by the GUI 203, on the decoded video data, and for displaying them on the screen 21, and the audio output unit 213 for mixing an audio generated by each application and the decoded audio data, and for outputting them. Therefore, the screen generating apparatus can switch to a screen display visible to the viewer by allowing the viewer to freely make a setting of arrangement of one or more applications each of which displays video information.

In this Embodiment 1, the application data are beforehand stored in the application data storage unit 202, as previously mentioned. As an alternative, the broadcast provider can provide the application data which are suited to the video. In this case, the screen generating apparatus 200 acquires the application data via either the network interface 205 or the tuner 208, and stores the application data in the application data storage unit 202. In this structure, the screen generating apparatus can display an application which is suited to an image of a specific scene on the screen, and therefore can provide program related information, a commercial, or the like for the viewer.

In addition, the screen generating apparatus in according to this Embodiment 1 is constructed in such a way as to arrange one or more applications on the screen by using a screen layout in which the same video content ID as the video content ID "001" described by the video information metadata is described. As an alternative, by associating specific information included in the video information metadata, e.g., a genre, a channel, or the like with each possible screen layout in advance, when receiving a video to which video information metadata specified by the viewer, such as a genre or a channel, belongs, the screen generating apparatus can arrange one or more applications on the screen by using a screen layout associated with the specified genre, channel, or the like. More specifically, by describing an ID of a genre, a channel, or the like in each possible screen layout in advance, when the screen layout forming unit 204 searches for a screen layout in step ST113 shown in Fig. 7, the screen generating apparatus can acquire a screen layout in which an ID corresponding to the video information metadata is described. In this structure, because one type of screen layout can be applied to the video information metadata about a plurality of programs, the screen generating apparatus can decrease the number of times that the screen generating apparatus generates a screen layout, and can also arrange one or more applications automatically for each of more types of videos.

### Embodiment 2.

In Embodiment 2, an image layout sharing system which has a screen layout sharing server in order to share a screen layout generated by the screen generating apparatus 200 which a broadcast receive terminal 20 in accordance with Embodiment 1 has among a plurality of broadcast receive terminals will be explained. Fig. 9 is an explanatory drawing showing the structure of the screen layout sharing system in accordance with Embodiment 2 of the present invention. Each of broadcast receive terminals 20a and 20b shown in Fig. 9 has the same structure as the broadcast receive terminal 20 in accordance with Embodiment 1, and is provided with the screen generating apparatus 200. These broadcast receive terminals 20a and 20b are connected to the screen layout sharing server 50 via a network, and either video information metadata or a screen layout is transmitted and received between each of the broadcast receive terminals 20a and 20b and the screen layout sharing server 50.

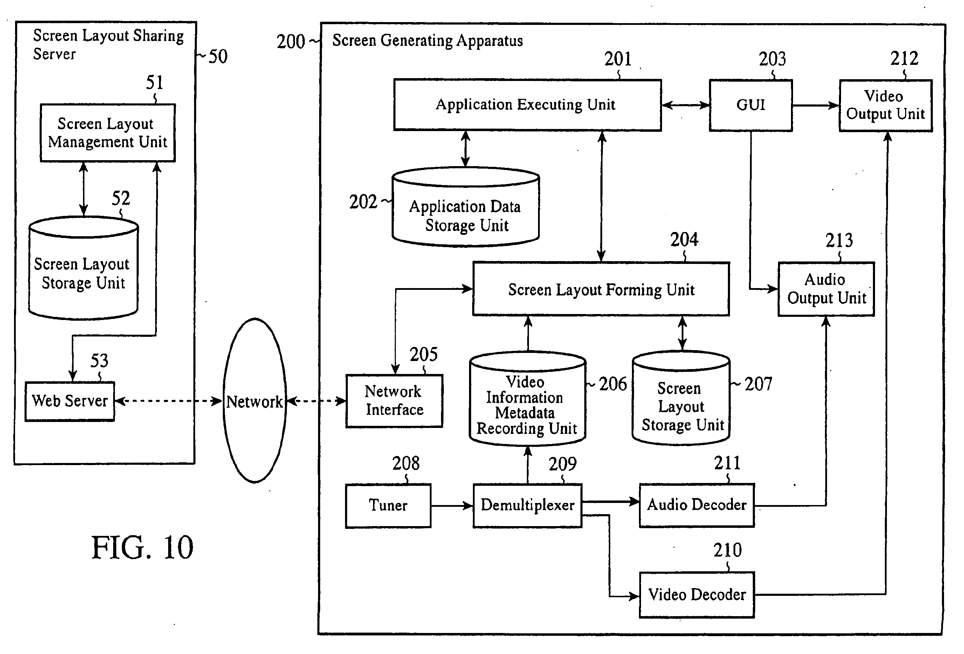

Fig. 10 is a block diagram showing the structure of the screen layout sharing system in accordance with this Embodiment 2. In Fig. 10, the same components as those shown in Fig. 2 or like components are designated by the same reference numerals as those shown in Fig. 2 and the explanation of the components will be omitted hereafter. The network interface 205 of the screen generating apparatus 200 which each of the broadcast receive terminals 20a and 20b has is connected to the screen layout sharing server 50 via the network. The screen layout sharing server 50 shown in Fig. 10 is connected to the screen generating apparatus 200 via the network, and is provided with a web server 53 for receiving an upload of a screen layout and for transmitting a screen layout which the web server receives a request to download, a screen layout storage unit 52 for storing a screen layout, and a screen layout management unit 51 for managing a screen layout received from the screen generating apparatus 200 to store the screen layout in the screen layout storage unit 52, and for retrieving a screen layout which the screen layout management unit receives a request to download from the screen generating apparatus 200 from the screen layout storage unit 52.

Hereafter, the operation of the screen layout sharing system will be explained. First, a case in which the screen generating apparatus 200 uploads a screen layout generated thereby to the screen layout sharing server 50 will be explained. In a case in which a screen layout is newly generated (step ST124 shown in Fig. 7), when, for example, an upload instruction provided by a viewer is inputted to the GUI 203, the screen layout forming unit 204 connects with the web server 53 in the screen layout sharing server 50 via the network interface 205. The screen generating apparatus then uploads the generated screen layout together with corresponding video information metadata. The web server 53 outputs the screen layout and the video information metadata which the web server has received to the screen layout management unit 51. The screen layout management unit 51 associates the received screen layout with the video information metadata and outputs the received screen layout to the screen layout storage unit 52, and the screen layout storage unit 52 stores the received screen layout therein. The associating of the screen layout with the video information metadata can be carried out by numbering them with a common video content ID or the like, as explained in, for example, Embodiment 1.

Next, a case in which the screen generating apparatus 200 downloads a screen layout from the screen layout sharing server 50 will be explained. When the screen layout forming unit 204 searches through the screen layout storage unit 207 for a screen layout (step ST113 shown in Fig. 7), the screen layout forming unit 204 connects with the web server 53 in the screen layout sharing server 50 via the network interface 205. The screen layout forming unit 204 then specifies the video content ID included in the video information metadata, and makes a request to download the screen layout associated with the video information metadata by using the video content ID.

The web server 53 outputs the received video content ID to the screen layout management unit 51. The screen layout management unit 51 makes a search so as to determine whether the screen layout corresponding to this video content ID exists in the screen layout storage unit 52. When determining, as a result of the search, that the screen layout exists in the screen layout storage unit 52, the screen layout management unit 51 transmits this screen layout to the screen generating apparatus 200 via the web server 53. In contrast, when determining, as a result of the search, that the screen layout does not exist in the screen layout storage unit 52, the screen layout management unit 51 transmits a message to notify the fact to the screen generating apparatus 200 via the web server 53.

The screen generating apparatus 200 can be constructed in such a way as to download a screen layout at a timing except when the screen layout forming unit 204 searches through the screen layout storage unit 207 for the screen layout (step ST113 shown in Fig. 7). For example, the screen generating apparatus 200 can be constructed in such a way as to make a connection with the screen layout sharing server 50 at regular intervals to synchronize the screen layout storage unit 207 which the screen generating apparatus 200 has with the screen layout storage unit 52 which the screen layout sharing server 50 has.

As mentioned above, because the image layout sharing system according to this Embodiment 2 is constructed in such a way that the screen layout sharing server 50 is connected with a plurality of screen generating apparatuses 200, the plurality of screen generating apparatus 200 can share screen layouts. Furthermore, in a case in which a viewer uses a plurality of screen generating apparatuses 200, because the image layout sharing system can cause a specific screen generating apparatus 200 to upload a screen layout generated thereby to the screen layout sharing server 50 and then allow any other screen generating apparatus 200 to download the screen layout from the screen layout sharing server 50, the image layout sharing system can avoid the necessity for all the screen generating apparatuses 200 to carry out generation and settings of a screen layout. In addition, because a plurality of screen generating apparatuses 200 share a screen layout which a viewer has generated and set up, each of the plurality of screen generating apparatuses does not need to carry out generation and settings of a screen layout individually and can make an arrangement of one or more applications on the screen automatically.

### Embodiment 3.

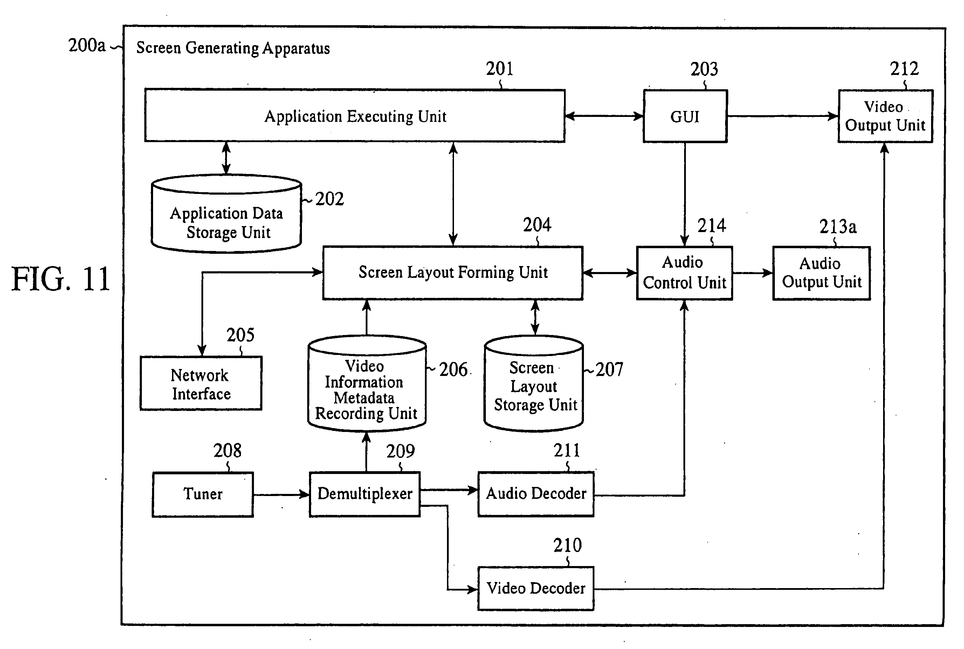

Fig. 11 is a block diagram showing the structure of a screen generating apparatus in accordance with Embodiment 3 of the present invention. In Fig. 11, the same components as those shown in Fig. 2 or like components are designated by the same reference numerals as those shown in Fig. 2 and the explanation of the components will be omitted hereafter. The screen generating apparatus 200a in accordance with this Embodiment 3 is constructed in such a way as to include an audio control unit 214 in addition to the screen generating apparatus 200 in accordance with above-mentioned Embodiment 1. This audio control unit 214 performs sound field settings, such as a sound volume balance and a sound effect, at a time of mixing the audio data about an application outputted from the GUI 203 with the decoded audio data outputted from the audio decoder 211.

When, in step ST128 shown in Fig. 7, a request to output an audio is outputted from the GUI 203, the audio control unit 214 acquires a screen layout and video information metadata which are associated with each other via a video content ID from the screen layout forming unit 204, and, on the basis of the contents of the video and the description of an application defined by the screen layout associated with the video, mixes the audio data about the application and the decoded audio data outputted from the audio decoder according to priorities which are preset. Because the process reaching step ST128 is the same as that of above-mentioned Embodiment 1, the explanation of the process will be omitted hereafter.

For example, the audio control unit 214 extracts information about the video, such as a video content ID and a genre ("genre: music", "genre: movie", or the like), which is included in the video information metadata. The application executing unit 201 uses, as a key, an application ID which is described in the screen layout 44 as shown in Fig. 6 to acquire the application data 43 as shown in Fig. 5 from the application data storage unit 202, and extracts the description of the application, such as the genre of the application ("genre: music", "genre: movie", or the like).

The video control unit 214 stores the priority of each genre therein in advance in such a way that the priority of "genre: photo" is 3, the priority of "genre: music" is 5, and the priority of "genre: movie" is 10. In this case, the audio control unit is constructed in such a way as to, at the time of mixing, make each audio have a higher volume level with increase in the numeric value of its priority. The audio control unit 214 then compares the genre described in the video information metadata with the genre described in the screen layout, and, when, for example, the genre of the video is "genre: movie" and the genre of the application is "genre: music", performs a mixing operation of increasing the volume level of the decoded audio which accompanies the video and decreasing the volume level of the audio of the application or muffling this audio according to their priorities.

As the rule governing the mixing, another rule can be used instead of the above-mentioned presetting of priorities. For example, priorities can be generated dynamically according to a history of the viewer's setting operations, or the like, or priorities can be preset by describing an item of "volume" in the application data about the application.

The audio data about the application and the decoded audio data which are mixed by the audio control unit 214 are then outputted to the audio output unit 213a.

As mentioned above, the screen generating apparatus according to this Embodiment 3 is constructed in such a way as to assign priorities to the audio data about an application and the decoded audio data, respectively, and include the audio control unit 214 for mixing the decoded audio data and the audio data about the application while adjusting the sound volume of the decoded audio data and the sound volume of the audio data about the application according to their priorities. Therefore, the screen generating apparatus can avoid the necessity for the viewer to adjust the audio of the video and the audio of the application and can perform the sound field setting automatically.

### Embodiment 4.

The screen generating apparatus 200 in accordance with above-mentioned Embodiment 1 is constructed in such a way as to download an arrangement template from the arrangement template providing server 30, and arrange one or more applications according to the arrangement template. In contrast, a screen generating apparatus 200 in accordance with the present Embodiment 4 is constructed in such a way as to arrange one or more applications without using any arrangement template by using an image analyzing unit 215.

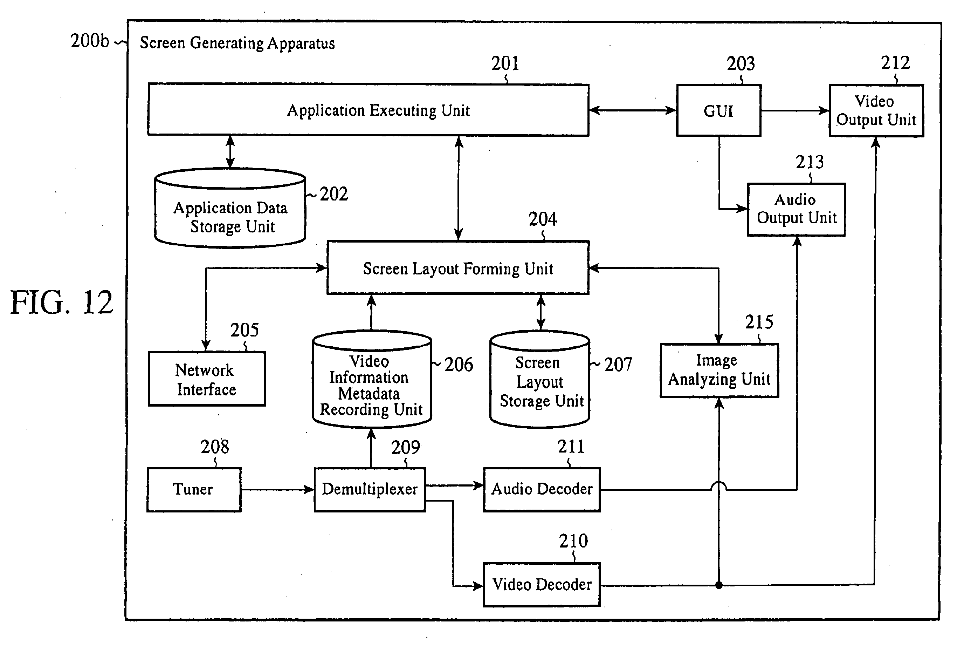

Fig. 12 is a block diagram showing the structure of a screen generating apparatus in accordance with Embodiment 4 of the present invention. In Fig. 12, the same components as those shown in Fig. 2 or like components are designated by the same reference numerals as those shown in Fig. 2 and the explanation of the components will be omitted hereafter. The screen generating apparatus 200b in accordance with this Embodiment 4 is constructed in such a way as to include the image analyzing unit 215 in addition to the screen generating apparatus 200 in accordance with above-mentioned Embodiment 1. This image analyzing unit 215 performs image analysis of the decoded video data outputted from the video decoder 210, determines an area in which each application to be placed can be arranged, and generates an arrangement template.

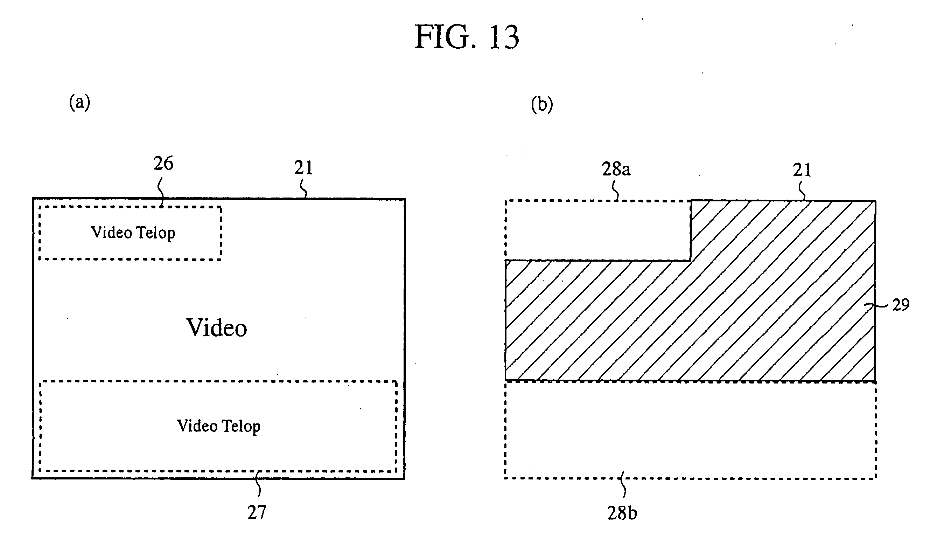

Hereafter, an operation of generating an arrangement template of the image analyzing unit 215 will be explained. Fig. 13 is an explanatory drawing showing an example of the screen of a broadcast receive terminal in accordance with this Embodiment 4. Fig. 13 (a) shows an example of the video displayed on the screen 21 of the broadcast receive terminal 20, and telops 26 and 27 are included in the video. Because each of the telops 26 and 27 in the video consists of characters and a still image, a small time-varying change occurs in each pixel of each of the telops. Therefore, the image analyzing unit 215 analyzes the decoded video data outputted from the video decoder 211 and compares the difference between the video data about adjacent frames, or the like to detect a boundary between pixels having a large change and pixels having a small change.

Fig. 13 (b) shows areas in which the telops in the video which the image analyzing unit 215 has detected from the video on the screen 21 shown in Fig. 13 (a) are displayed, respectively. In the figure, each broken chain line shows a boundary between pixels having a large change and pixels having a small change. The image analyzing unit 215 judges that the areas 28a and 28b each of which is surrounded by boundaries and each of which includes pixels having a small change are the ones in which the telops are displayed, respectively. Therefore, the image analyzing unit 215 generates an arrangement template in which an area where no telop is not displayed is defined as an application area 29. As an alternative, the image analyzing unit 215 can divide the application area 29 into a plurality of sections, and can generate an arrangement template in which a plurality of applications can be drawn in the plurality of sections, respectively.

The screen generating apparatus 200a equipped with the image analyzing unit 215 shown in Fig. 12, in steps ST114 and ST115 shown in Fig. 7, can carry out a process of acquiring an arrangement template which the image analyzing unit 215 has generated by performing an image analysis of the decoded video data from the video decoder 210 by using the screen layout forming unit 204, instead of carrying out the process of acquiring an arrangement template associated with the video information provided by the arrangement template providing server 30 and currently being received by using the screen layout forming unit 204. Because other processes other than this process are the same as those shown in Fig. 7, the explanation of the other processes will be omitted hereafter.

As mentioned above, because the screen generating apparatus according to this Embodiment 4 is constructed in such a way as to have the image analyzing unit 215 for analyzing the decoded video data so as to determine an area in which the decoded video data do not vary with time, and for defining this area as an application area, the screen generating apparatus does not need to acquire any arrangement template from the arrangement template providing server 30 by using the network interface 205. Furthermore, the necessity for a broadcast provider or the like to make available any arrangement template beforehand can be eliminated.

### Embodiment 5.

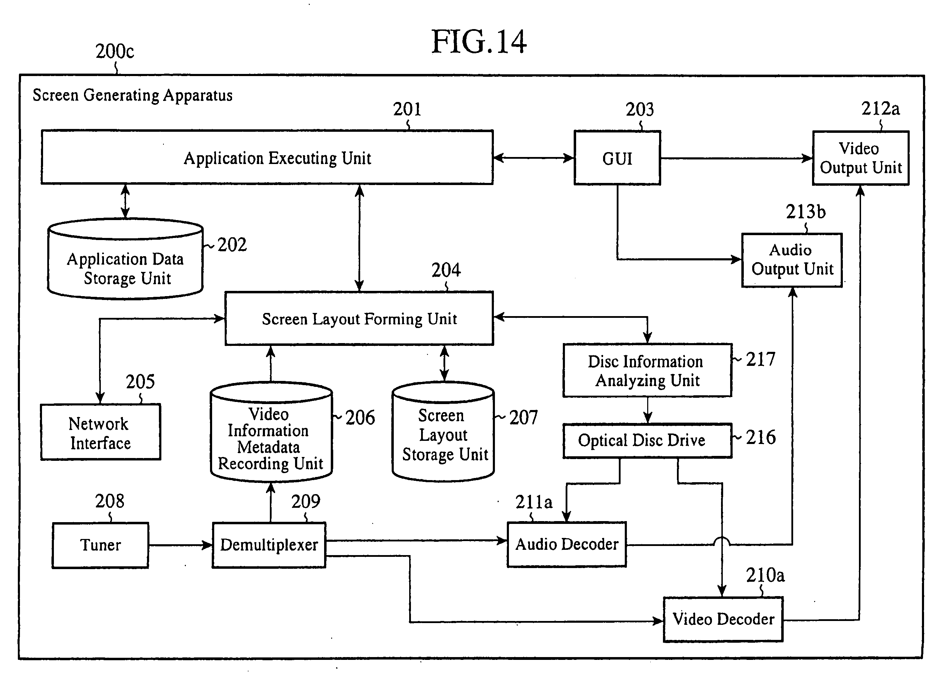

Fig. 14 is a block diagram showing the structure of a screen generating apparatus in accordance with Embodiment 5 of -the present invention. In Fig. 14, the same components as those shown in Fig. 2 or like components are designated by the same reference numerals as those shown in Fig. 2 and the explanation of the components will be omitted hereafter. The screen generating apparatus 200c shown in Fig. 14 includes an optical disc drive 216 for playing back an optical disc, and a disc information analyzing unit 217 for acquiring disc information included in the optical disc played back by the optical disc drive 216, in addition to the screen generating apparatus 200 in accordance with above-mentioned Embodiment 1. This disc information analyzing unit 217 automatically sets up a screen layout for an application which is to be executed on the basis of the disc information acquired from the optical disc drive 216.

When a viewer operates the screen generating apparatus to insert an optical disc into the optical disc drive 216 mounted to the screen generating apparatus 200c, this optical disc drive 216 plays back the optical disc. The disc information analyzing unit 217 then acquires a disc ID for specifying the optical disc from the optical disc drive 216, and outputs the disc ID to the screen layout forming unit 204.

The screen generating apparatus 200c shown in Fig. 14, in steps ST101 to ST112 shown in Fig. 7, carries out the processing using the video of the optical disc played back by the optical disc drive 216 and the disc ID (an identification number) which is the video information, instead of the video and the video information which are received by the tuner 208. Next, the network interface 205, in step ST114 shown in Fig. 7, downloads an arrangement template corresponding to the disc ID from the arrangement template providing server 30 in response to a request from the screen layout forming unit 204. An application corresponding to the optical disc is then displayed on the screen of the broadcast receive terminal on the basis of the arrangement template.

The video data of the optical disc are outputted from the optical disc drive 216 to the video decoder 210a, and are decoded by the video decoder. The decoded video data are then outputted to the video output unit 212a. The decoded video data are superimposed on the video data about the application outputted from the GUI 203 by the video output unit 212a. Similarly, the audio data of the optical disc are outputted from the optical disc drive 216 to the audio decoder 211a, and are decoded. The decoded audio data are then outputted to the audio output unit 213b. The decoded audio data are mixed with the audio data about the application outputted from the GUI 203 by the audio output unit 213b.

In this case, as the application, there can be, for example, an application which displays information associated with a movie when playing back a DVD (Digital Versatile Disk) in which the movie content is recorded, or an application which acquires caption data for a movie for which display of subtitles in a desired language cannot be selected by using the network interface 205 and which displays the caption data. The manufacturer of the optical disc has only to generate such the application data and the arrangement template and distribute them from the arrangement template providing server 30.

As mentioned above, because the screen generating apparatus according to this Embodiment 5 is constructed in such a way as to include the optical disc drive 216 for playing back an optical disc in which a video, an audio, and a disc ID are stored, and the information analyzing unit 217 for acquiring the disc ID from the optical disc, the screen generating apparatus can arrange an application automatically at the same time when it plays back the optical disc. The manufacturer of the optical disc generates and distributes application data about the application and an arrangement template for arrangement of the application. Therefore, related information or the like can be additionally displayed on the video of the optical disc.

In the above-mentioned explanation, the cases in which above-mentioned Embodiments 2 to 5 are applied to the structure shown in above-mentioned Embodiment 1, respectively are shown. The present invention is not limited to these cases, and either the structures shown in above-mentioned Embodiments 2 to 4 or the structures shown in above-mentioned Embodiments 2, 3 and 5 can be combined properly.

Many widely different embodiments of the present invention may be constructed without departing from the scope of the present invention. It should be understood that the present invention is not limited to the specific embodiments described in the specification, except as defined in the appended claims.

## Claims

1. A screen generating apparatus (200, 200a, 200b, or 200c) **characterized in** comprising:
a receiving unit (208) for receiving a content having an identification number;
an application executing unit (201) for executing an application which generates application image data;
a screen layout storage unit (207) for storing screen layout information associated with an identification number of a content;
a network interface for downloading an arrangement template for generating screen layout information from a server;
a screen layout forming unit (204) for, for said identification number of the received content, determining, whether a screen layout information for said identification number is stored in the screen layout storage unit (207) and for, in the case that a screen layout information for said identification number is stored, acquiring said screen layout information from the screen layout storage unit (207) or for, in the case that no screen layout information for said identification number is stored, downloading an arrangement template from a server via the network interface and generating screen layout information which associates the application image data generated by said application with a predefined screen area, on the basis of said arrangement template;
an application drawing unit (203) for drawing as an application image the application image data generated by said application in the screen area associated with said application image data on a basis of the screen layout information acquired or generated by said screen layout forming unit (204); and
a video output unit (212 or 212a) for displaying said application image drawn by said application drawing unit on a screen while superimposing said application image on a video included in said content.

2. The screen generating apparatus according to claim 1, **characterized in that** said application executing unit executes an application which generates application sound data.

3. The screen generating apparatus according to claim 2, **characterized in that** said screen generating apparatus includes an audio output unit (213, 213a, or 213b) for outputting application sound data while superimposing the application sound data on an audio included in the content received by said receiving unit.

4. The screen generating apparatus according to claim 3, **characterized in that** the application sound data generated by the application and the audio included in the content have priorities, respectively, and said screen generating apparatus includes an audio control unit (214) for setting a sound volume of said application sound data and a sound volume of said audio according to the priorities and said audio output unit outputs said application sound data while superimposing said application sound data on said audio on a basis of said sound volumes set by said audio control unit.

5. The screen generating apparatus according to any one of claims 1 to 4, **characterized in that** said screen generating apparatus includes an image analyzing unit (215) for analyzing the video so as to detect an area in which said video does not vary with time, and for defining said area as the screen area in which the application image generated by the application is displayed.

6. The screen generating apparatus according to any one of claims 1 to 4, **characterized in that** said screen generating apparatus includes an optical disc drive (216) for playing back an optical disc in which a content having an identification number is stored, and an information analyzing unit (217) for acquiring said identification number from said optical disc.

7. A screen layout sharing system comprising:
a screen generating apparatus (200, 200a, 200b, or 200c) according to any one of claims 1 to 6; and
a screen layout sharing server (50) connected to said screen generating apparatus, for receiving the screen layout information generated by said screen generating apparatus and storing the screen layout information for the identification number, and for, in response to a screen layout transmission re-quest based on an identification number which is transmitted from said screen generating apparatus, transmitting a screen layout information corresponding to the identification number to said screen generating apparatus.

## Patentansprüche

1. Bildschirmanzeigeerzeugungsvorrichtung (200, 200A, 200B, oder 200C), **gekennzeichnet durch** Umfassen:
einer Empfangseinheit (208) zum Empfangen eines Inhalts, der eine Identifikationsnummer aufweist;
einer Anwendungsausführungseinheit (201) zum Ausführen einer Anwendung, die Anwendungsbilddaten erzeugt;
einer Bildschirmanzeige-Layout-Speichereinheit (207) zum Speichern von Bildschirmanzeige-Layout-Informationen, die mit einer Identifikationsnummer eines Inhalts assoziiert sind;
einer Netzwerkschnittstelle zum Herunterladen einer Anordnungsvorlage von einem Server zum Erzeugen von Bildschirmanzeige-Layout-Informationen;
einer Bildschirmanzeige-Layout-Bildungseinheit (204) zum Bestimmen, für die besagte Identifikationsnummer des empfangenen Inhalts, ob eine Bildschirmanzeige-Layout-Information für die besagte Identifikationsnummer in der Bildschirmanzeige-Layout-Speichereinheit (207) gespeichert ist, und zum, in dem Fall dass eine Bildschirmanzeige-Layout-Information für die besagte Identifikationsnummer gespeichert ist, Erlangen der besagten Bildschirmanzeige-Layout-Information von der Bildschirmanzeige-Layout-Speichereinheit (207) oder zum, in dem Fall dass keine Bildschirmanzeige-Layout-Information für die besagte Identifikationsnummer gespeichert ist, Herunterladen einer Anordnungsvorlage von einem Server über die Netzwerkschnittstelle und Erzeugen einer Bildschirmanzeige-Layout-Information, welche die Anwendungsbilddaten, die von der besagten Anwendung erzeugt wurden, auf der Basis der besagten Anordnungsvorlage mit einem vorbestimmten Bildschirmanzeigebereich assoziiert;
einer Anwendungszeichnungseinheit (203) zum Zeichnen der Anwendungsbilddaten, die von der besagten Anwendung erzeugt wurden, in den Bildschirmanzeigebereich, der mit den besagten Anwendungsbilddaten auf einer Basis der Bildschirmanzeige-Layout-Informationen, die durch die besagte Bildschirmanzeige-Layout-Bildungseinheit (204) erlangt oder erzeugt worden sind, assoziiert ist, als ein Anwendungsbild; und
einer Videoausgabeeinheit (212 oder 212A) zum Darstellen des besagten Anwendungsbildes, welches von der besagten Anwendungszeichnungseinheit gezeichnet wurde, auf einem Bildschirm, während das besagte Anwendungsbild einem Video, das in dem besagten Inhalt enthalten ist, überlagert wird.

2. Bildschirmanzeigeerzeugungsvorrichtung nach Anspruch 1, **dadurch gekennzeichnet, dass** die besagte Anwendungsausführungseinheit eine Anwendung ausführt, die Anwendungstondaten erzeugt.

3. Bildschirmanzeigeerzeugungsvorrichtung nach Anspruch 2, **dadurch gekennzeichnet, dass** die besagte Bildschirmanzeigeerzeugungsvorrichtung eine Audioausgabeeinheit (213, 213A oder 213B) zum Ausgeben von Anwendungstondaten, während die Anwendungstondaten einem Ton, der in dem Inhalt, der von der besagten Empfangseinheit empfangen wurde, enthalten ist, überlagert werden, aufweist.

4. Bildschirmanzeigeerzeugungsvorrichtung nach Anspruch 3, **dadurch gekennzeichnet, dass** die Anwendungstondaten, die durch die Anwendung erzeugt werden, und der Ton, der in dem Inhalt enthalten ist, jeweils Prioritäten aufweisen, und die besagte Bildschirmanzeigeerzeugungsvorrichtung eine Audiosteuereinheit (214) zum Einstellen einer Lautstärke der besagten Anwendungstondaten und einer Lautstärke des besagten Tones gemäß den Prioritäten aufweist und die besagte Audioausgabeeinheit die besagten Anwendungstondaten ausgibt, während die besagten Anwendungstondaten dem besagten Ton auf einer Basis der besagten Lautstärken, die durch die besagte Audiosteuereinheit eingestellt werden, überlagert werden.

5. Bildschirmanzeigeerzeugungsvorrichtung nach einem der Ansprüche 1 bis 4, **dadurch gekennzeichnet, dass** die besagte Bildschirmanzeigeerzeugungsvorrichtung eine Bildanalyseeinheit (215) zum Analysieren des Videos beinhaltet, um einen Bereich zu detektieren, in dem das besagte Video nicht mit der Zeit variiert, und zum Bestimmen des besagten Bereichs als den Bildschirmanzeigebereich, in dem das Anwendungsbild, das durch die Anwendung erzeugt wird, dargestellt wird.

6. Bildschirmanzeigeerzeugungsvorrichtung nach einem der Ansprüche 1 bis 4, **dadurch gekennzeichnet, dass** die besagte Bildschirmanzeigeerzeugungsvorrichtung ein optisches Plattenlaufwerk (216) zum Abspielen einer optischen Platte, auf der ein Inhalt, der eine Identifikationsnummer aufweist, gespeichert ist, und eine Informationsanalyseeinheit (217) zum Erlangen der besagten Identifikationsnummer von der besagten optischen Platte beinhaltet.

7. Bildschirmanzeige-Layout-Sharing-System umfassend:
eine Bildschirmanzeigeerzeugungsvorrichtung (200, 200A, 200B oder 200C) nach einem der Ansprüche 1 bis 6; und
einen Bildschirmanzeige-Layout-Sharing-Server (50), der mit der besagten Bildschirmanzeigeerzeugungsvorrichtung verbunden ist, zum Empfangen der Bildschirmanzeige-Layout-Informationen, die durch die besagte Bildschirmanzeigeerzeugungsvorrichtung erzeugt werden, und Speichern der Bildschirmanzeige-Layout-Informationen für die Identifikationsnummer, und zum, in Erwiderung auf eine Bildschirmanzeige-Layout-Übertragungsanfrage basierend auf einer Identifikationsnummer, die von der besagten Bildschirmanzeigeerzeugungsvorrichtung übertragen wird, Übertragen einer Bildschirmanzeige-Layout-Information, die der Identifikationsnummer entspricht, zu der besagten Bildschirmanzeigeerzeugungsvorrichtung.

## Revendications

1. Appareil de génération d'écran (200, 200a, 200b, ou 200c), **caractérisé en ce qu'**il comprend :
une unité de réception (208) pour recevoir un contenu présentant un numéro d'identification ;
une unité d'exécution d'application (201) pour exécuter une application qui génère des données d'image d'application ;
une unité de stockage de présentation d'écran (207) pour stocker des informations de présentation d'écran associées à un numéro d'identification d'un contenu ;
une interface de réseau pour télécharger un motif d'agencement destiné à générer des informations de présentation d'écran à partir d'un serveur ;
une unité de formation de présentation d'écran (204) pour déterminer, pour ledit numéro d'identification du contenu reçu, si des informations de présentation d'écran pour ledit numéro d'identification sont stockées dans l'unité de stockage de présentation d'écran (207) et pour acquérir, dans le cas où des informations de présentation d'écran pour ledit numéro d'identification sont stockées, lesdites informations de présentation d'écran à partir de l'unité de stockage de présentation d'écran (207) ou pour télécharger, dans le cas où aucune information de présentation d'écran pour ledit numéro d'identification n'est stockée, un motif d'agencement, à partir d'un serveur, par l'intermédiaire de l'interface de réseau, et générer des informations de présentation d'écran, lesquelles associent les données d'image d'application, générées par ladite application, à une zone d'écran prédéfinie, sur la base dudit motif d'agencement ;
une unité de traçage d'application (203) pour tracer, sous la forme d'une image d'application, les données d'image d'application générées par ladite application, dans la zone d'écran associée auxdites données d'image d'application, sur la base des informations de présentation d'écran acquises ou générées par ladite unité de formation de présentation d'écran (204) ; et
une unité de sortie vidéo (212 ou 212a) pour afficher ladite image d'application tracée par ladite unité de traçage d'application, sur un écran, tout en superposant ladite image d'application sur une vidéo incluse dans ledit contenu.

2. Appareil de génération d'écran selon la revendication 1, **caractérisé en ce que** ladite unité d'exécution d'application exécute une application qui génère des données audio d'application.

3. Appareil de génération d'écran selon la revendication 2, **caractérisé en ce que** ledit appareil de génération d'écran inclut une unité de sortie audio (213, 213a, ou 213b) pour générer en sortie des données audio d'application tout en superposant les données audio d'application sur des données audio incluses dans le contenu reçu par ladite unité de réception.

4. Appareil de génération d'écran selon la revendication 3, **caractérisé en ce que** les données audio d'application générées par l'application, et les données audio incluses dans le contenu, présentent des priorités, respectivement, et ledit appareil de génération d'écran inclut une unité de commande audio (214) pour régler un volume sonore desdites données audio d'application et un volume sonore desdites données audio, en fonction des priorités, et ladite unité de sortie audio génère en sortie lesdites données audio d'application tout en superposant lesdites données audio d'application sur lesdites données audio sur la base desdits volumes sonores réglés par ladite unité de commande audio.

5. Appareil de génération d'écran selon l'une quelconque des revendications 1 à 4, **caractérisé en ce que** ledit appareil de génération d'écran inclut une unité d'analyse d'image (215) pour analyser la vidéo de manière à détecter une zone dans laquelle ladite vidéo ne varie pas au fil du temps, et pour définir ladite zone en tant que la zone d'écran dans laquelle l'image d'application générée par l'application est affichée.

6. Appareil de génération d'écran selon l'une quelconque des revendications 1 à 4, **caractérisé en ce que** ledit appareil de génération d'écran inclut un lecteur de disque optique (216) pour lire un disque optique dans lequel un contenu présentant un numéro d'identification est stocké, et une unité d'analyse d'informations (217) pour acquérir ledit numéro d'identification à partir dudit disque optique.

7. Système de partage de présentation d'écran, comprenant :
un appareil de génération d'écran (200, 200a, 200b, ou 200c) selon l'une quelconque des revendications 1 à 6 ; et
un serveur de partage de présentation d'écran (50) connecté audit appareil de génération d'écran, pour recevoir les informations de présentation d'écran générées par ledit appareil de génération d'écran, et stocker les informations de présentation d'écran pour le numéro d'identification, et pour transmettre, en réponse à une demande de transmission de présentation d'écran basée sur un numéro d'identification qui est transmis à partir dudit appareil de génération d'écran, des informations de présentation d'écran, correspondant au numéro d'identification, audit appareil de génération d'écran.
